# DEMANDE DE BREVET EUROPEEN

(11) **EP 3 263 520 A1**
(43) Date de publication de la demande: **03.01.2018**
(21) Numéro de dépôt: 17177767.5
(22) Date de dépôt: 26.06.2017
(51) Int. Cl.: C01B 3/34

(54) **PROCÉDÉ VAPOREFORMAGE DE GAZ NATUREL PRÉSENTANT DEUX CHAMBRES DE COMBUSTION GÉNÉRANT LES FUMÉES CHAUDES APPORTANT LES CALORIES NÉCESSAIRES AU PROCÉDÉ ET CONNECTÉES EN SERIE OU EN PARALLÈLE**

(30) Priorité: 28.06.2016 FR 1656017
(71) Demandeur: IFP Energies nouvelles, 92500 Rueil-Malmaison (FR)
(72) Inventeur: GUILLOU, Florent, 69360 Ternay (FR); SURLA, Karine, 69560 Saint Cyr sur le Rhone (FR); FISCHER, Beatrice, 69005 Lyon (FR); AMBROSINO, Jean-Louis, 69360 Ternay (FR)

(57) **Abrégé**

La présente invention décrit un procédé de vaporeformage de gaz naturel comportant un réacteur échangeur de vaporeformage (3000), un réacteur de conversion du CO en CO2 (3100), et une unité de purification de l'hydrogène par PSA (4300), en vue de produire un gaz de synthèse dans lequel les calories nécessaires à la réaction de vaporeformage sont apportées par une première chambre de coambustion (3100) connectée à une seconde chambre de combustion (3200) générant des fumées permettant un très haut degré d'intégration thermique.

## Description

Le procédé HyGenSys est un procédé de production d'hydrogène à partir de méthane. Le principe de base et les caractéristiques principales du procédé sont en grande partie donnés dans le brevet EP 2447210. L'originalité de ce mode de production d'hydrogène repose sur un réacteur-échangeur très spécifique tant du point de vue de la conception mécanique et de la compacité, que du point de vue de l'intégration thermique poussée qu'il permet et qui conduit à des économies d'énergie substantielles. Cette intégration thermique poussée permet d'avoir une consommation de vapeur d'eau parfaitement ajustée aux besoins dudit procédé, contrairement à la plus part des procédés de l'art antérieur qui sont souvent exportateurs de vapeur, et ceci pour un large gamme du rapport S/C (abréviation du rapport molaire de vapeur d'eau et de la charge hydrocarbonée, ici le gaz naturel).

Cette caractéristique constitue un avantage très intéressant dans la mesure où les sites susceptibles d'accueillir une unité de production d'hydrogène par reformage du méthane à la vapeur (dont l'abréviation est SMR de l'Anglais « Steam Méthane Reforming »), comme les raffineries de pétrole, sont souvent eux même excédentaires en vapeur et n'ont pas d'intérêt à accueillir un producteur de vapeur supplémentaire.

### EXAMEN DE L'ART ANTERIEUR

Le brevet EP 2447210 décrit le schéma de base du procédé de production d'hydrogène par vaporeformage de gaz naturel, dit procédé « HyGenSys », qu'on rappelle brièvement ci-dessous :
La chaleur nécessaire à la réaction de reformage du méthane à la vapeur, fortement endothermique, est apportée par des fumées pressurisées produites par une chambre de combustion alimentée principalement avec le gaz de purge de l'étape de purification de l'hydrogène (PSA, abréviation de la terminologie anglaise Pressure Swing Adsorber »), et par un combustible d'appoint.

Après réaction à haute température, la chaleur résiduelle des fumées est valorisée sous forme de vapeur qui alimente le procédé et une turbine qui entraîne le compresseur d'air nécessaire à la production de fumées sous pression. Ce mode de fonctionnement est particulièrement adapté pour la gamme préférée de ratio (molaire) vapeur sur charge hydrocarbonée revendiquée entre 1,5 et 2. Or les unités de SMR sont couramment opérées en excès de vapeur avec un ratio (molaire) vapeur sur carbone compris entre 2 et 4 (S. Reyes et al., Ind. Eng. Chem. Res., Vol. 42, No. 8, 2003).

Le procédé selon la présente invention fait intervenir une seconde chambre de combustion et présente une intégration thermique encore plus poussée qui permet d'étendre la gamme d'opération possible du réacteur échangeur de vaporeformage du procédé « HyGenSys ».

L'intérêt de la seconde chambre de combustion est aussi de rendre le procédé plus flexible, aussi bien au niveau du démarrage qu'en opération, et également vis-à-vis du type de gaz naturel traité. L'intégration thermique décrite dans la présente invention grâce à la seconde chambre de combustion permet une configuration optimisée pour maximiser le rendement énergétique de l'installation.

### DESCRIPTION SOMMAIRE DES FIGURES

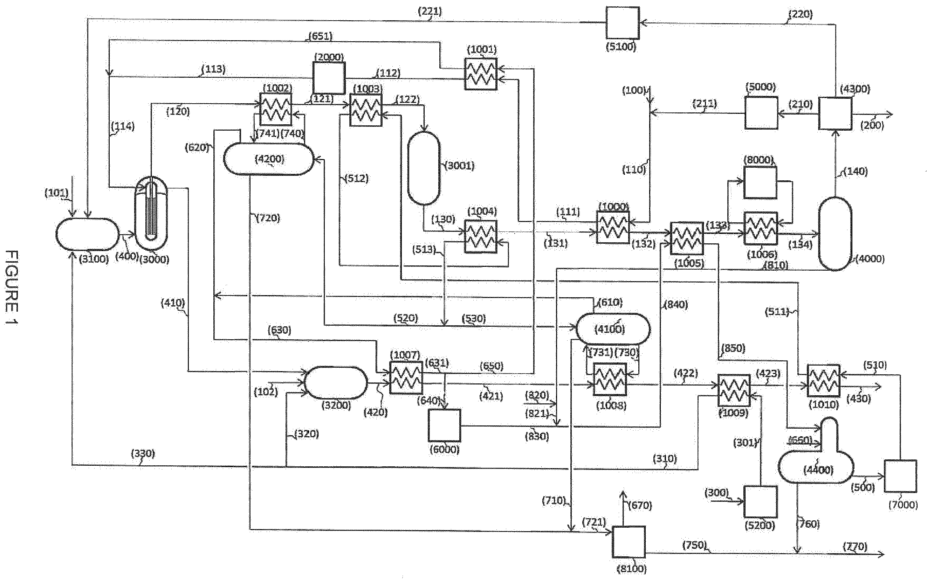

- La figure 1 représente une première configuration du procédé selon l'invention, la chambre de combustion primaire et la chambre de combustion secondaire fonctionnant en série.

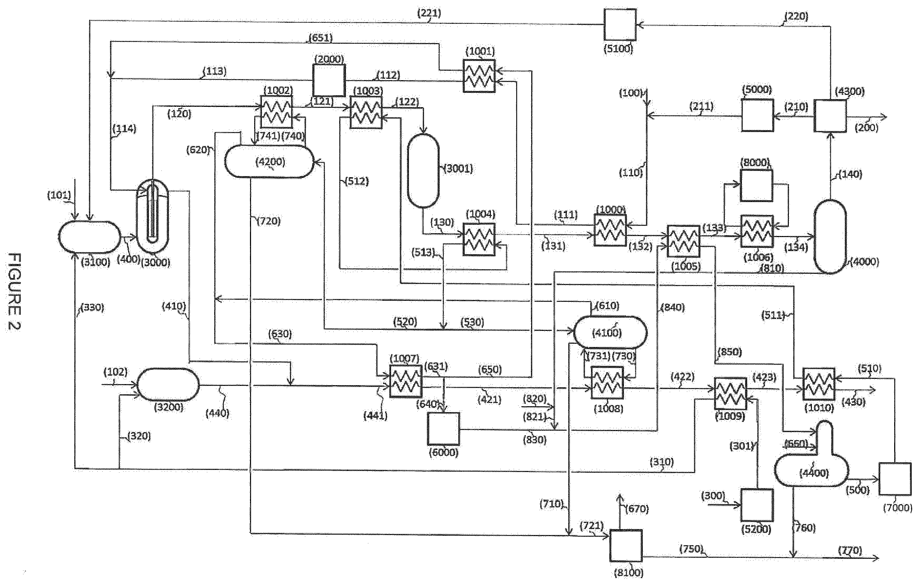

- La figure 2 représente une seconde configuration du procédé selon l'invention, dans laquelle la chambre de combustion secondaire n'est pas en série, mais génère des fumées qui sont ensuite mélangées à celles provenant de la chambre de combustion primaire pour générer un flux global de fumées réchauffées.

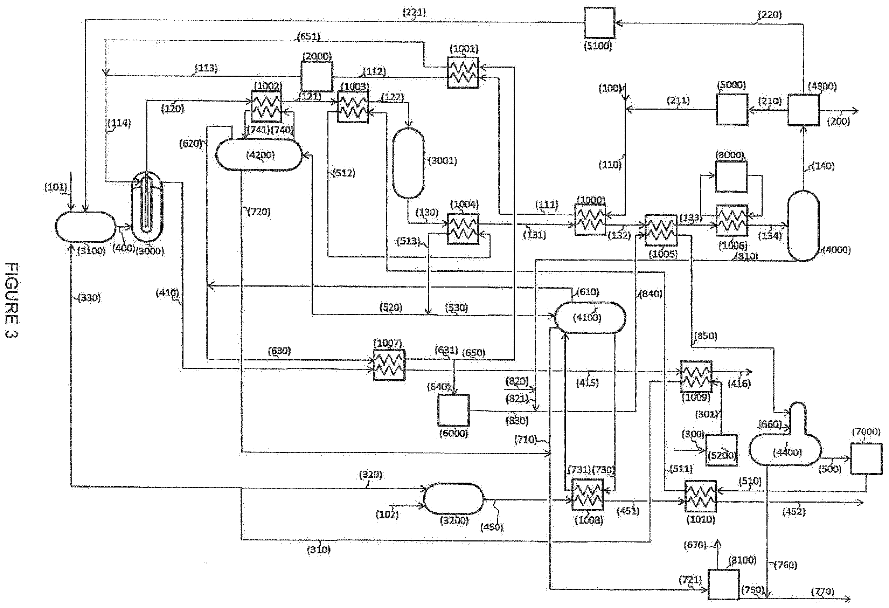

- La figure 3 représente une troisième configuration du procédé selon l'invention, dans laquelle la chambre de combustion secondaire fonctionne en parallèle de la chambre de combustion principale et génère un flux de fumée indépendant qui n'est pas mélangé au flux des fumées issues de la chambre de combustion primaire.
- Dans la suite du texte on appelle première chambre de combustion la chambre de combustion primaire, et seconde chambre de combustion la chambre de combustion secondaire, le qualificatif de primaire signifiant que les fumées générées dans la chambre primaire ou première chambre de combustion apporte les calories au réacteur échangeur de vaporeformage catalytique.

### DESCRIPTION SOMMAIRE DE L'INVENTION

La présente invention peut être considérée comme une amélioration du procédé de production de gaz de synthèse par vaporeformage de gaz naturel tel que décrit dans le brevet EP 2447210.

Le perfectionnement introduit consiste essentiellement en l'ajout d'une second chambre de combustion permettant de générer un flux de fumées réchauffées qui, in fine, permet d'augmenter la production de vapeur d'eau surchauffée du procédé, et ainsi d'accéder à une gamme plus large de rapport molaire S/C que dans l'art antérieur. Cette gamme de rapport molaire S/C est ainsi portée à un intervalle de 1,5 à 5, et préférentiellement de 2 à 4.

Plus précisément, la présente invention peut se définir comme un procédé de vaporeformage de gaz naturel utilisant un réacteur échangeur de vaporeformage (3000), un réacteur de conversion du CO en CO2 (3001), souvent appelé réacteur de WGS (de l'anglais Water Gaz Shift), et une unité de purification de l'hydrogène par PSA (4300), en vue de produire un gaz de synthèse dans lequel les calories nécessaires à la réaction de vaporeformage sont apportées par des fumées de combustion générées dans une première chambre de combustion (3100) sous pression complétée par une seconde chambre de combustion (3200) articulée en série ou en parallèle par rapport à la première chambre de combustion, de façon à produire un flux de vapeur d'eau dans un échangeur (1007) avec lesdites fumées issues des première et seconde chambres de combustion, de manière à couvrir à la fois les besoins en vapeur d'eau de la réaction de vaporeformage et ceux de la turbine à vapeur (6000) permettant l'alimentation du compresseur d'air (5200), ladite vapeur d'eau générée par le procédé permettant d'atteindre des rapports molaires S/C au niveau du réacteur échangeur de vaporeformage (3000) compris entre 1,5 et 5, et préférentiellement compris entre 2 et 4.

La présente invention se décline en 3 variantes selon la manière dont s'articule la seconde chambre de combustion par rapport à la première chambre de combustion générant les fumées chaudes du procédé.

Dans une première variante du présent procédé, la seconde chambre de combustion est alimentée par les fumées issues de la première chambre de combustion et relève leur niveau de température.

Dans une seconde variante de la présente invention, la seconde chambre de combustion fonctionne de manière indépendante de la première chambre de combustion, et les fumées générées par ladite seconde chambre rejoignent celles générées par la première chambre de combustion.

Dans une troisième variante de la présente invention, la seconde chambre de combustion fonctionne également de manière indépendante de la première chambre de combustion, et les fumées générées par ladite seconde chambre de combustion suivent un parcours indépendant de celui des fumées issues de la première chambre de combustion. Selon la première variante de la présente invention, l'invention peut se définir comme un procédé de vaporeformage de gaz naturel en vue de produire un gaz de synthèse (quelque fois appelé « syngaz »), dans lequel les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars.

Lesdites fumées sont introduites dans le réacteur échangeur de vaporeformage (3000) à une température comprise entre 950°C et 1300°C, et cèdent leur calories au fluide de procédé dans le réacteur échangeur de vaporéformage. Elles quittent le réacteur échangeur (3000) à une température comprise entre 450°C et 750°C, puis sont réchauffées dans une seconde chambre de combustion (3200) utilisant un combustible d'appoint de manière à relever leur niveau de température à une valeur comprise entre 450°C et 1250°C, niveau de température qui permet la génération de vapeur d'eau dans un échangeur (1007) avec lesdites fumées réchauffées, de manière à couvrir à la fois les besoins en vapeur d'eau de la réaction de vaporeformage d'une part, et ceux de la turbine à vapeur (6000) permettant l'alimentation du compresseur d'air (5200) d'autre part. La vapeur d'eau générée au cours des différents échanges de chaleur du procédé permet d'atteindre des rapports S/C au niveau du réacteur échangeur de vaporeformage (3000) compris entre 1 et 5, et préférentiellement compris entre 2 et 4.

Selon la seconde variante du procédé de vaporeformage de gaz naturel selon l'invention, les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars, lesdites fumées étant introduites dans le réacteur échangeur de vaporeformage (3000) à une température comprise entre 950°C et 1300°C. Lesdites fumées cèdent leur calories au fluide de procédé dans le réacteur échangeur de vaporéformage (3000) et quittent le réacteur échangeur à une température comprise entre 450°C et 750°C, puis rejoignent les fumées (440) issues d'une seconde chambre de combustion (3200) de manière à produire un flux de fumées mélangées (441) et réchauffées dont la température est comprise entre 450°C et 1250°C. Ce niveau de température permet la génération de vapeur d'eau dans un échangeur (1009) avec lesdites fumées réchauffées (441), de manière à couvrir à la fois les besoins en vapeur de la réaction de vaporeformage et ceux de la turbine à vapeur (6000) permettant l'alimentation du compresseur d'air (5200). La vapeur d'eau générée au cours du procédé permet d'atteindre des rapports S/C au niveau du réacteur échangeur de vaporeformage compris entre 1,5 et 5, et préférentiellement compris entre 2 et 4.

Selon la troisième variante du procédé de vaporeformage de gaz naturel selon l'invention, les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars, lesdites fumées étant introduites dans le réacteur échangeur de vaporeformage (3000) à une température comprise entre 950°C et 1300°C. Lesdites fumées cèdent leurs calories au fluide de procédé dans le réacteur échangeur de vaporéformage (3000) et quittent le réacteur échangeur à une température comprise entre 450°C et 750°C, formant un premier flux de fumées (410),
- ledit premier flux de fumées (410) issu du réacteur échangeur (3000) est introduit dans l'échangeur (1007), de façon à surchauffer le flux de vapeur entrant (630) de manière à produire un flux de vapeur surchauffé (631) et un flux de fumées refroidies (415) qui est amené dans la zone d'échange (1009) pour préchauffer l'air de combustion (301), d'où résulte un flux d'air comprimé réchauffé (310) et un flux de fumées refroidies (416), lesdites fumées refroidies (416) étant à une pression comprise entre 1 et 2 bar et à une température comprise entre 130 et 300 °C,
- le second flux de fumées (450) issu de la seconde chambre de combustion (3200) fonctionnant en parallèle de la première chambre de combustion (3100), est à une température comprise entre 900°C et 1500°C, préférentiellement entre 950 et 1300 °C, et à une pression comprise entre 1,5 et 4 bar, le dit second flux de fumées (450) est amené dans l'échange de chaleur (1008) au contact d'un flux d'eau de chaudière (730) pour en vaporiser une fraction (731), il en résulte un flux de vapeur partiellement vaporisé (731) et des fumées partiellement refroidie (451), ledit flux de fumées refroidies (451) étant introduit dans l'échangeur (1010) pour produire un flux d'eau de chaudière réchauffée (511), le flux de fumées refroidies (452) étant à une pression comprise entre 1 et 2 bar et à une température comprise entre 130 et 300 °C.

Dans une version préférée, valable pour les 3 variantes du procédé de vaporeformage de gaz naturel selon l'invention, le combustible majoritairement utilisé dans la première chambre de combustion (3100) est constitué par le gaz de purge de l'unité de purification par PSA du gaz de synthèse issu du réacteur échangeur de vaporeformage.

Dans une version également préférée, valable pour les 3 variantes du procédé de vaporeformage de gaz naturel selon l'invention, le combustible d'appoint utilisée dans la première chambre de combustion (3100), est un gaz combustible léger disponible sur le site.

Lorsqu'un tel combustible n'est pas disponible, on peut utiliser du gaz naturel et éventuellement le même gaz naturel que celui utilisé comme charge du réacteur échangeur de vaporeformage (3000).

Ce combustible peut également être utilisé dans la seconde chambre de combustion (3200) et, préférentiellement, la chambre primaire (3100) et la chambre secondaire (3002) utilisent le même combustible.

### DESCRIPTION DETAILLEE DE L'INVENTION

La description détaillée qui suit s'appuie sur la figure 1 qui représente la version préférée du schéma de production selon l'invention.

La représentation des échangeurs sur la figure 1 est donné à titre indicatif. Quand une configuration particulière d'un échangeur est préférée, elle est précisée dans la description détaillée.

Les pressions sont exprimées en bar absolus notés bar.

On peut distinguer plusieurs circuits dans le présent schéma :
- le circuit de la charge gaz naturel (100),
- le circuit de l'effluent gaz de synthèse aboutissant à la production d'hydrogène (200),
- le circuit des fumées (400) produites dans la chambre de combustion principale (3100),
- le circuit des fumées (420), (440), (450) produites dans la chambre de combustion secondaire (3200) respectivement selon les trois variantes préférées du présent procédé de vaporeformage.
- le circuit de l'hydrogène issu du PSA (220).

Le présent schéma de production dans ses 3 variantes se traduit par une très forte intégration thermique, en particulier au niveau du circuit des fumées.

Le présent schéma est conçu pour minimiser l'apport de calories externes qui est réalisé au niveau de la chambre de combustion principale (3100), et de la chambre de combustion secondaire (3200).

Il est également conçu pour que l'unité soit flexible en vapeur d'eau introduite avec la charge, au sens où le procédé peut être opéré avec des rapports vapeur d'eau sur charge (noté S/C) compris entre 1,5 et 5, et préférentiellement compris entre 2 et 4.

Pour un catalyseur de vaporeformage donné, il y a un fort intérêt à pratiquer des rapports S/C aussi élevés que possible pour réduire le risque de cokage au niveau des tubes du réacteur de vaporeformage, et pour faciliter la réaction ultérieure de WGS.

Le procédé est alimenté en gaz naturel (100) à une pression de l'ordre de 30 à 42 bar selon la perte de charge induite par le réacteur échangeur lui-même et les autres échangeurs associés.

De façon facultative et selon le choix de l'opération catalytique choisie pour la désulfuration (2000) de la charge, on mélange à la charge (100) un flux d'hydrogène (211) issu de la production d'H2 purifié (4300) de l'unité. Typiquement cet appoint d'hydrogène est compris entre 1 et 10% du flux molaire de la charge (100), préférentiellement entre 2 et 7 %.

La fonction de cet appoint en hydrogène est de favoriser la conversion des molécules soufrées éventuellement contenues dans la charge (100) en H2S qui est capté par les masses de captation contenues dans (2000). Il en résulte un flux (110) de gaz naturel enrichi en hydrogène.

La charge enrichie en hydrogène (110) est réchauffée dans un échangeur de chaleur (1000) au contact d'un flux procédé (c'est-à-dire issu du procédé) qui est le flux (131) (gaz de synthèse) déjà partiellement refroidi (131). La fonction de cet échange est de préchauffer la charge une première fois pour économiser sur la chaleur à fournir dans le réacteur échangeur (3000).

Le flux de gaz de synthèse partiellement refroidi (131) est à une température typiquement comprise entre 160 et 220 °C. On cherche à réchauffer la charge enrichie en hydrogène à une température au moins égale à 130°C, préférentiellement au moins égale à 140 °C.

On préfère pour cet échange de chaleur (1000) une configuration à contre-courant.

La charge enrichie en hydrogène et réchauffée une première fois (111) est réchauffée une seconde fois dans un échangeur de chaleur (1001). Le réchauffage de la charge se fait ici au moyen d'un flux de vapeur surchauffée (650).

La fonction de ce second réchauffage est de préchauffer la charge de sorte que sa température soit en adéquation avec la désulfuration (2000) situées en aval. On vise un réchauffage à une température comprise entre 300 et 400°C, préférentiellement entre 330°C et 380°C.

La température de la vapeur surchauffée (650) est comprise entre 440 °C et 500 °C.

La charge enrichie en hydrogène et surchauffée (112) est ensuite désulfurée dans l'unité de désulfuration (2000). La désulfuration a pour fonction de protéger les phases actives du catalyseur de reformage, (par exemple au nickel métallique), du soufre qui réduit fortement leur activité. Cette étape de désulfuration comporte nécessairement des masses de captation pour piéger le soufre. Ces masses sont par exemple constituées de lits fixes d'oxyde de zinc ou de cuivre. Selon les espèces sulfurées rencontrées dans la charge, et en particulier pour traiter le cas des odorisants soufrés utilisés pour le gaz naturel, il peut être nécessaire de faire précéder ces masses de captation par une hydrogénation catalytique dont la fonction est de convertir des espèces soufrées réfractaires à la captation sur les lits de garde en espèces soufrées aptes à être captées comme l'H₂S (non représenté sur la fig1). Comme indiqué précédemment, la présence d'hydrogène dans la charge favorise cette étape catalytique.

La spécification en soufre en sortie de l'étape de désulfuration est généralement inférieure au ppm. Dans le cas de charges très peu soufrées, on peut avoir recours à des masses de captation à froid, au nickel par exemple, pour désulfurer la charge. En ce cas elles sont situées au plus près de la batterie limite, typiquement sur le flux (100) (non représenté).

La charge désulfurée (113) est ensuite mélangée avec un flux de vapeur (651). On vise ici un ratio molaire H₂O/C compris entre 1,5 et 5, préférentiellement entre 1,5 et 3 dans le cas de marche normal. Un ratio de 1 correspond à la stoechiométrie de la réaction de reformage, un ratio supérieur à 2 permet à la fois de favoriser les réactions de reformage, mais aussi de prévenir l'apparition de coke sur le catalyseur du réacteur échangeur.

La charge mélangée à la vapeur (114) est ensuite introduite dans le réacteur échangeur (3000). Sa température est comprise entre 300 et 450 °C, préférentiellement entre 330 et 400 °C. La charge préchauffée et mélangée à la vapeur (114) est introduite dans le tube procédé du réacteur échangeur (3000), ce tube contient un catalyseur adapté aux réactions de reformage du méthane à la vapeur. Typiquement sa phase active comporte du Nickel.

Le réacteur échangeur (3000) est le siège d'un ensemble de réactions équilibrées correspondant majoritairement au reformage du méthane (SMR, abréviation de Steam Methane Reforming) et à la réaction de gaz à l'eau (WGS, abréviation de Water Gas Shift, réaction transformant le mélange CO+H20 en CO2 +H2).

La réaction de SMR est fortement endothermique, et la conversion du méthane par cette réaction équilibrée est favorisée par les hautes températures. La réaction de WGS est au contraire exothermique.

Le bilan global de ces réactions (SMR et WGS) dans les conditions opératoires choisies, c'est-à-dire température de sortie du lit catalytique comprise entre 800 et 1000 °C, pression comprise entre 25 et 35 bars, est globalement endothermique. La chaleur nécessaire aux réactions est apportée par les fumées chaudes sous pression (400) issues de la chambre de combustion principale (3100).

les fumées (400) sont à une température comprise entre 950°C et 1300°C et à une pression comprise entre 1,5 et 4 bars, préférentiellement entre 2 et 3 bars.

Elle parcourt le réacteur échangeur à contre-courant de la charge (114) dans l'espace annulaire interstitiel entre le tube procédé et le tube de fumées chargé de guider les fumées au contact du tube procédé et entourant ce dernier.

L'objectif de cet échange est d'atteindre la température visée pour la réaction en bas du tube procédé, l'agencement à contre-courant permettant d'optimiser la valorisation des calories à haute température des fumées (400).

Le gaz de synthèse brut produit par les réactions équilibrées de SMR et WGS est évacué par un tube baïonnette qui remonte au centre du tube procédé et traverse ainsi la zone catalytique située entre le tube procédé externe et le tube procédé interne, l'ensemble des deux tubes formant le tube baïonnette. Ici encore on crée un échange de chaleur à contre-courant entre le gaz de synthèse chaud et la charge qui permet d'optimiser la valorisation des calories hautes températures apportées au réacteur échangeur (3000).

Il en résulte un flux de gaz de synthèse partiellement refroidi (120), typiquement entre 500 et 750 °C, et un flux de fumées refroidies (410) typiquement entre 450 et 700 °C.

Le gaz de synthèse brut (120), souvent appelé « syngaz », est à haute température, en pression et comporte une forte teneur en hydrogène, typiquement entre 40 et 60 %mol.

Les conditions de température entre 400°C et 900 °C étant favorables à une carburation néfaste (traduction de l'expression anglo saxonne « metal dusting ») de certains aciers, on cherche à s'en éloigner le plus rapidement possible. Cela est réalisé dans l'échangeur (1002) dont la fonction est à la fois de refroidir rapidement le gaz de synthèse brut (120) pour quitter les plages de conditions favorables audit « metal dusting », mais aussi de valoriser la chaleur transportée par le gaz de synthèse en vapeur d'eau sous pression.

Cette génération de vapeur d'eau sous pression se fait entre le flux de gaz de synthèse brut (120) et un flux d'eau de chaudière à son point de bulle issu du ballon de génération de vapeur (4200). Il en résulte un gaz de synthèse (121) refroidi typiquement entre 10 et 50 °C au-dessus du point d'ébullition de l'eau de chaudière (740).

A titre d'exemple ce point d'ébullition est de l'ordre de 250°C pour une pression d'eau de chaudière de l'ordre de 40 bar, et un flux d'eau de chaudière partiellement vaporisée (741), avec typiquement un taux de vaporisation compris entre 5 et 25 %.

L'agencement généralement gravitaire, des éléments (4200) et (1002) est connu de l'homme du métier pour la génération de vapeur. On utilise des matériaux adaptés, céramiques par exemple, dans l'échangeur (1002) pour prévenir tout risque de dégradation dû au « metal dusting ».

Le flux (121) contient encore une certaine teneur en monoxyde de carbone, typiquement entre 1% et 20 %, qui peut être converti en hydrogène dans un réacteur de WGS. Pour une certaine teneur en CO, par exemple de l'ordre de 10% ou moins, le CO peut être converti par un seul étage de WGS à basse température.

Le gaz de synthèse (121) atteint une température adaptée à son entrée dans le réacteur de WGS (3001) par un échange de chaleur (1003) avec de l'eau de chaudière préchauffée (511) sur son parcours de réchauffage en amont des ballons de génération de vapeur (4100) et (4200). La température du gaz de synthèse (122) en entrée du réacteur de WGS (3001) est typiquement comprise entre 200°C et 300°C, préférentiellement entre 200°C et 230 °C. Pour des teneurs en CO supérieures, on peut avoir recours à une étape de WGS à plus haute température en substitution ou en combinaison avec une WGS basse température (non représenté).

La réaction de WGS dans le réacteur (3001) est exothermique, Il en résulte un gaz de synthèse riche en hydrogène (130) dont la teneur en CO a été abaissée en deçà de 5% molaire, et dont la température a été augmentée de l'ordre de 70 à 150°C.

Cette augmentation de température est intimement liée aux conditions opératoires des réacteurs (3000) et (3001), mais aussi à la composition initiale de la charge et à son niveau de dilution à la vapeur.

La chaleur de la réaction de WGS est valorisée par un échange de chaleur (1004) avec de l'eau de chaudière réchauffée (512) issue d'un premier réchauffage en amont du réacteur de WGS.

La fonction de l'échangeur (1004) est d'amener l'eau de chaudière à une température adaptée à l'alimentation des ballons de génération de vapeur (4100) et (4200), soit 5 à 50°C en dessous du point de bulle de l'eau de chaudière présente dans ces ballons. Il en résulte un flux d'eau de chaudière préchauffée (513) et un flux de gaz de synthèse (131).

L'autre fonction de l'échangeur (1004) est de provoquer une baisse de température visant à condenser l'eau contenue dans le gaz de synthèse, condensation qui est poursuivie dans les échangeurs (1000), (1005) et (1006) en vue d'aborder l'étape de purification du gaz (4100). Une fraction liquide est susceptible d'apparaître dans le gaz de synthèse dès l'échangeur (1000). Cette fraction liquide pourra progresser avec le gaz de synthèse jusqu'au ballon séparateur (4000), ou être évacuée au fur et à mesure pour être rassemblée avec les condensats (840) du procédé en amont de l'échangeur (1005).

Comme indiqué précédemment, le gaz de synthèse réchauffe la charge (110) dans l'échangeur (1000), il en résulte le flux (132).

Le gaz de synthèse est ensuite refroidi par un échange de chaleur (1005) au contact des condensats du procédé (840). Il en résulte un gaz de synthèse refroidi (133) et des condensats réchauffés (850) entre 90 et 130 °C, préférentiellement entre 100 et 110°C. Le choix de cette température est destiné à assurer la bonne marche du désaérateur (4400) à sa pression d'opération, généralement comprise entre 1 et 2 bars.

Le gaz de synthèse refroidi (133) en aval de l'échangeur (1005) est encore à une température comprise entre 100 et 200°C pour une pression de l'ordre de 25 à 35 bars. Ces conditions sont insuffisantes pour assurer la condensation de l'humidité du gaz. On complète ainsi par un refroidissement par une utilité froide composée d'une zone d'échange de chaleur (1006) et facultativement d'une recirculation de fluide caloporteur refroidi reliée à un dispositif de régénération (8000).

Typiquement on n'a pas besoin d'unité de régénération (8000) si l'échange de chaleur (1006) correspond à un aéroréfrigérant. Si l'échangeur (1006) correspond à un refroidissement par circulation d'eau de refroidissement, l'élément (8000) peut alors être une tour de refroidissement.

Le choix de l'échangeur (1006) est généralement dicté par les conditions climatiques sur le lieu d'implantation, mais surtout par la teneur maximale admissible en eau dans le gaz de synthèse par l'étape de purification (4300), typiquement inférieure à 10 000 ppm masse.

Il en résulte un gaz de synthèse refroidi (134) à une température typiquement inférieure à 50 °C. Les condensats, majoritairement aqueux, sont séparés (810) dans le ballon séparateur (4000). On obtient un gaz de synthèse riche en hydrogène séché (140).

L'étape suivante consiste à séparer (4300) les espèces présentes pour obtenir un hydrogène pur à plus de 95%, préférentiellement à plus de 98%. Cette étape de séparation est généralement effectuée grâce à un procédé utilisant le principe de l'absorption en modulation de pression (noté PSA pour Pressure Swing Absorption selon la terminologie anglaise).

Les effluents de cette étape sont au nombre de 3 :
- Un flux d'hydrogène purifié destiné à être exporté (200)
- Un flux d'hydrogène purifié destiné à être recyclé dans le procédé (210)
- Un flux de purge contenant majoritairement les produits issus de la conversion autres que l'hydrogène ainsi que les espèces non converties (220)

Le flux d'hydrogène purifié (200) destiné à être exporté est à une pression comprise entre 20 et 30 bars et à une température proche de la température de séparation (4000).

Le flux d'hydrogène purifié (210) destiné à être recyclé est remonté en pression grâce à une étape de compression (5000) afin de pouvoir remonter les pertes de charge du procédé et être acheminé (211) vers la charge en entrée d'unité (100). Le flux de purge PSA (220) est produit à basse pression, typiquement entre 1 et 3 bars. Il est remonté en pression lors d'une étape de compression (5100) de façon à pouvoir être acheminé (221) vers la chambre de combustion primaire (3100) qui est opérée en pression.

Le procédé selon l'invention inclut aussi un circuit vapeur dont la fonction est à la fois d'alimenter le procédé, et de valoriser la chaleur issue du procédé en proposant une solution d'entraînement du compresseur d'air. Le système est alimenté en eau de chaudière par la ligne (500). Cette eau est à basse pression et en dessous de son point d'ébullition. Elle est montée en pression par des pompes (7000) de manière à être à une pression supérieure (510) à la pression des ballons de génération de vapeur, compte tenu des pertes de charge sur son parcours, soit typiquement entre 40 et 60 bars.

Le flux (510) est réchauffé par un échange de chaleur (1010) avec les fumées refroidies (423). Il en résulte des fumées froides (430) à une température comprise entre 110 et 200°C, et un flux d'eau de de chaudière réchauffée (511) à une température comprise entre 110 et 170°C.

L'eau de chaudière (511) est à nouveau réchauffée par un échange de chaleur avec le gaz de synthèse brut (121) pour amener ce dernier à une température compatible avec l'opération souhaitée du réacteur de WGS (3001).

L'eau de chaudière (512) est réchauffée une dernière fois dans l'échangeur (1004) avant d'alimenter les ballons de génération de vapeur par un échange avec le gaz de synthèse (130) issu du réacteur de WGS (3001). Le but de cet échange est d'amener l'eau de chaudière (513) à une température comprise entre 5°C et 50°C du point d'ébullition dans les ballons (4100) et (4200).

Cette eau de chaudière est partagée en deux flux (530) et (520) pour alimenter respectivement les ballons de génération de vapeur (4100) et (4200).

Le ballon (4100) est connecté à l'échangeur de chaleur (1008) par les conduites (730) et (731). L'eau de chaudière contenue dans le ballon (4100) est généralement à son point de bulle. La conduite (730) achemine l'eau de chaudière vers la zone d'échange de chaleur (1008) où une fraction de l'eau est vaporisée.

L'eau de chaudière partiellement vaporisée (731) retourne au ballon de génération de vapeur (4100) dans lequel la fraction vapeur est évacuée (610) pour alimenter le réseau vapeur de l'unité.

La fraction liquide est recyclée dans le ballon (4100). La perte de niveau liée à la production de vapeur est compensée par une alimentation continue en eau de chaudière (530).

La force motrice de la boucle de circulation constituée par les flux (730) et (731) est généralement gravitaire. D'une façon générale, les conduites (730) et (731) peuvent être multiples.

Le ballon (4200) est connecté à l'échangeur de chaleur (1002) par les conduites (740) et (741). D'une façon générale l'eau de chaudière contenue dans le ballon (4200) est à son point de bulle. La conduite (740) achemine l'eau de chaudière vers la zone d'échange de chaleur (1002) où une fraction de l'eau est vaporisée. L'eau de chaudière partiellement vaporisée (741) retourne au ballon de génération de vapeur (4200) où la fraction vapeur est évacuée (620) pour alimenter le réseau vapeur de l'unité. La fraction liquide est recyclée dans le ballon (4200). La perte de niveau liée à la production de vapeur est compensée par une alimentation continue en eau de chaudière (520).

La force motrice de la boucle de circulation constituée par les flux (740) et (741) est généralement gravitaire. D'une façon générale et connue de l'homme du métier, les conduites (740) et (741) peuvent être multiples. Les génératrices de vapeur (4100) et (4200) produisent une qualité de vapeur proche dont le point d'opération est de l'ordre de 40 bars pour une température de l'ordre de 250°C.

La plage d'opération pour les génératrices de vapeur se situe entre 35 et 60 bar avec un taux de vaporisation pour les flux (731) et (741) compris entre 5 et 25 %.

Les flux de vapeurs (610) et (620) sont réunis (630) pour être surchauffés (631) dans un échangeur de chaleur (1007) au contact des fumées chaudes (420) issues de la chambre de combustion secondaire (3200).

La vapeur surchauffée (631) est partagée entre l'alimentation (640) de la turbine (6000) et l'alimentation (650) du procédé. La vapeur surchauffée alimentant le procédé (650) a pour première fonction de préchauffer la charge lors de l'échange de chaleur (1001) décrit précédemment. Elle est ensuite (651) mélangée à la charge désulfurée (113) pour constituer (114) l'alimentation du réacteur échangeur (3000).

Le flux de vapeur surchauffée (640) alimente la turbine (6000) qui permet d'entraîner les machines tournantes de l'unité, et en particulier le compresseur d'air (5200). La liaison entre la turbine (6000) et le compresseur (5200) n'est pas représentée sur la figure 1.

La turbine de détente est par exemple, connectée à un circuit de refroidissement pour condenser la vapeur détendue (non représenté). La fonction de cette condensation est double : cela génère un vide partiel en aval de la turbine qui améliore le rendement de la détente et donc le travail récupérable à l'arbre de celle-ci et cela permet aussi de pouvoir recycler (830) les condensats dans le circuit d'eau de chaudière (les éléments de mise en circulation de ces condensats comme des pompes ne sont pas représentés).

Le circuit de recycle de l'eau de chaudière inclut la récupération des condensats du procédé (810) issu de la condensation de l'humidité contenue dans le gaz de synthèse en amont de l'unité de purification (4300), un appoint en eau (820), de préférence adaptée à une utilisation en chaudière type déminéralisée par exemple, qui sont réunis (840) avec les condensats (830). Ces condensats (840) sont réchauffés (1005) par un échange de chaleur avec le gaz de synthèse partiellement refroidis (132). Les condensats réchauffés (850) sont détendus et envoyés au dégazeur (4400) dont la fonction est d'éliminer les gaz dissous qui, comme le CO₂ par son action acidifiante, peut perturber ou dégrader le circuit d'eau de chaudière. Le principe de fonctionnement consiste à stripper les condensats avec de la vapeur basse pression (660).

Un autre levier de contrôle sur la qualité de l'eau consiste à prélever en continue une fraction de l'eau de chaudière dans les différentes capacités constituant le réseau d'eau de chaudière (4100), (4200) et (4400). Pour les capacités en température et en pression comme les ballons de génération de vapeur (4100) et (4200), ces prélèvements, respectivement (710) et (720) représentent de l'ordre de 1 à 10%, préférentiellement de 1 à 5% du flux d'alimentation de ces capacités en eau de chaudière.

Ceux-ci sont refroidis (8100) afin d'être à une température adaptée à leur traitement, typiquement moins de 50°C. A l'échelle d'une unité SMR ces flux sont importants et il peut être intéressant de détendre (non représenté en amont du refroidissement) ces condensats chauds (721) pour produire de la vapeur basse pression (670) qui peut être adaptée, par exemple, au stripage (660) de l'eau de chaudière dans le dégazeur (4400). Le flux liquide résiduel est quant à lui refroidi. Le dégazeur (4400) peut aussi comporter un prélèvement en continu (760) en particulier pour contrôler le taux de solide contenu dans l'eau de chaudière. Les effluents (750) et (760) étant chargés en impuretés, ils sont dirigés (770) vers une unité de traitement d'eau (non représentée).

L'énergie nécessaire eu reformage du gaz naturel est apportée par des fumées sous pression. De l'air (300) est monté en pression par un compresseur (5200), de préférence entraîné par la turbine à vapeur (6000). L'air comprimé (301) est à une pression comprise entre 2 et 5 bars. De façon préférée, l'air est préchauffé par échange de chaleur (1009) avec les fumées partiellement refroidies (422). Le flux d'air réchauffé (310) est typiquement entre 200 et 300 °C.

L'air préchauffé est partagé entre (330) l'alimentation en air de la chambre de combustion principale (3100) et (320) l'alimentation de la chambre de combustion secondaire (3200). Ce partage est facultatif dans la mesure où selon la technologie choisie, comme avec les brûleurs en veine, on peut effectuer la combustion avec l'oxygène résiduel contenu dans les fumées chaudes (410) dans la chambre de combustion secondaire (3200).

La chambre de combustion principale est alimentée en air sous pression et réchauffé (330), par la purge de l'unité de purification (4300), puis recomprimée (221) ainsi que par un appoint en combustible (101). Cet appoint en combustible est nécessaire dans la mesure où l'énergie dégagée par la combustion de la purge (221) n'apporte pas suffisamment d'énergie pour assurer à elle seule le bon fonctionnement du réacteur échangeur (3000).

Le combustible d'appoint (101) est de préférence gazeux, et l'on choisit par exemple, d'utiliser (101) le même gaz naturel que celui servant à alimenter le procédé (100).

Selon le site choisi, il est possible que celui-ci soit excédentaire en gaz combustibles légers, comme par exemple du gaz combustible de raffinerie, auquel cas on privilégiera ces combustibles pour tout ou partie de l'alimentation des chambres de combustion, l'appoint pouvant se faire avec le gaz naturel servant à alimenter le procédé.

La chambre de combustion principale (3100) produit des fumée (400) à une pression comprise entre 1,5 et 4 bars, préférentiellement entre 2 et 3 bar, et parcourt le réacteur échangeur (3000) à contre-courant de la charge (114), puis quittent (410) le réacteur échangeur à une température comprise entre 450°C et 750°C.

Elles reçoivent un complément d'énergie dans la chambre de combustion secondaire (3200) par combustion d'un combustible d'appoint (102) du même type que (101).

L'apport d'oxygène au niveau de la chambre de combustion secondaire (3200) se fait pour tout ou partie par l'oxygène résiduel contenu dans (410), avec un complément d'air pressurisé préchauffé (320). Dans certains cas, cet air de combustion de la chambre de combustion secondaire (3200) sera comprimé par un compresseur indépendant du compresseur (5200), dédié à la dite chambre de combustion secondaire. L'alimentation de ce compresseur de la chambre de combustion secondaire pourra être électrique ou à la vapeur. Cette disposition confère plus de flexibilité au procédé. Il en résulte un flux de fumées réchauffées (420) à une température comprise entre 450 et 1250 °C dont la fonction est de surchauffer la vapeur dans l'échangeur (1007), et de générer de la vapeur dans l'échangeur (1008), de telle sorte que la production globale de vapeur des ballons (4100) et (4200) couvre le besoin en vapeur du procédé, et préférentiellement le besoin en vapeur du procédé et celui de l'alimentation de la turbine (6000) pour l'entrainement du compresseur (5200).

Il résulte de ces échanges des fumées refroidies (422) à une température comprise entre 5 et 50 °C au-dessus du point de bulle de l'eau de chaudière contenue dans le ballon de génération de vapeur (4100).

Dans le cas d'un point de bulle de l'ordre de 250 °C, cela se traduit par une température de fumées refroidies comprise entre 255 et 300 °C.

Ce niveau de température permet de préchauffer l'air dans l'échangeur de chaleur (1009). Il en résulte des fumées (423) dont la température est typiquement comprise entre 130 et 250 °C qui permettent de réchauffer une première fois l'eau de chaudière dans l'échangeur de chaleur (1010). Il en résulte des fumées froides (430) à une température comprise entre 110 et 200°C.

Il existe deux versions simplifiées du présent schéma selon que l'on supprime l'étape de préchauffage de l'air de combustion des chambres de combustion par l'intermédiaire de l'échangeur (1009) ou que l'on supprime l'étape de récupération d'énergie sur la vapeur surchauffée (6000), l'entrainement du compresseur (5200) pouvant alors se faire par tout moyen connu de l'homme du métier.

### Figure 2

La description de la figure 2 reprend la description de la figure 1 à l'exception de la génération des fumées surchauffées (410) en aval du réacteur échangeur.

La chambre de combustion (3200) est alimentée en air sous pression (320) et en combustible (102) tel que décrit précédemment. En revanche, elle n'est plus alimentée par les fumées (410) issues du réacteur échangeur (3000). La chambre de combustion secondaire (3200) fonctionne ainsi de façon indépendante de la chambre de combustion principale (3100) et génère un flux de fumées chaudes (440) qui est mélangé aux fumées (410) de façon à ce que le flux de fumées mélangées (441) ait des caractéristiques comparables au flux (420) décrit précédemment (figure 1). Les fumées (440) sont à une température comprise entre 650°C et 1800°C, préférentiellement entre 900°C et 1300°C, de manière à produire un flux de fumées mélangées (441) dont la température est comprise entre 450 et 1250 °C.

Les fumées mélangées (441) suivent ensuite les échanges précédemment décrits dans les échangeurs (1007), (1008), (1009) et (1010).

### Figure 3

La description de la figure 3 reprend la description de la figure 1 à l'exception de la gestion de la génération des fumées chaudes et de la valorisation de leur chaleur.

De la même façon que dans la variante décrite dans la figure 2, on fait fonctionner les chambres de combustion principale (3100) et secondaire (3200) de façon indépendante.

La différence est qu'ici, les deux chambres de combustion principale et secondaire, fonctionnent en parallèle, et que les fumées issues de chacune des chambres ne sont pas réunies. Le train d'échange est distribué sur les deux flux de fumées correspondants.

Le flux de fumées (410) issu du réacteur échangeur (3000) est tel que décrit précédemment. Dans cette variante, les fumées issues du réacteur échangeur (3100) sont directement introduites dans l'échangeur (1007), de façon à surchauffer le flux de vapeur (630). De manière préférée, l'échangeur (1007) fonctionne dans la à contre-courant. Il en résulte un flux de vapeur surchauffée (631) tel que décrit dans la figure 1 et un flux de fumées refroidies (415).

Ce flux de fumées refroidies est amené (415) dans la zone d'échange (1009) pour préchauffer l'air de combustion (301). Il en résulte un air comprimé réchauffé (310) tel que décrit précédemment dans la figure 1, et un flux de fumées refroidies (416). Ces fumées refroidies (416) sont à une pression comprise entre 1 et 2 bar et à une température comprise entre 130 et 300 °C.

Le flux de fumées (450) issu de la seconde chambre de combustion (3200) est à une température comprise entre 900°C et 1500°C, préférentiellement entre 950°C et 1300 °C, et à une pression comprise entre 1,5 et 4 bar. Les fumées (450) sont amenées dans l'échange de chaleur (1008) au contact d'un flux d'eau de chaudière (730) pour en vaporiser une fraction (731) tel que décrit précédemment.

Il en résulte un flux de vapeur partiellement vaporisé (731) et des fumées refroidies (451). Le flux de fumées refroidies (451) échange dans l'échangeur (1010) de la chaleur avec l'eau de chaudière (510) pour produire un flux d'eau de chaudière réchauffée (511) tel que décrit précédemment.

Il en résulte un flux de fumées refroidies (452) à une pression comprise entre 1 et 2 bar et à une température comprise entre 130 et 300 °C.

### EXEMPLES SELON L'INVENTION

Les deux exemples suivants visent à démontrer le fonctionnement d'une unité de production d'hydrogène selon l'invention, et particulièrement le rôle joué par la chambre de combustion secondaire dans la flexibilité de l'unité.

L'exemple 1 s'appuie sur la configuration préférée illustrée par la figure 1 pour un rapport molaire vapeur d'eau/ gaz naturel (S/C) de 2.

L'exemple 2 s'appuie sur la configuration préférée illustrée par la figure 1 pour un rapport S/C de 4.

### Exemple 1 :

Dans cet exemple on considère une unité de reformage à la vapeur intégrant le réacteur échangeur de vaporeformage « HyGenSys » selon la configuration présentée en figure 1.

La production est de 100 000 Nm3/h d'hydrogène à une pureté de 99,8 %mol.

La charge considérée est un gaz naturel contenant 150 ppm d'espèces soufrées dont la composition en fractions molaires est donnée dans le tableau 1.

La charge gaz naturel (100) alimente le procédé à raison de 29,7 t/h. On opère à un ratio molaire vapeur sur carbone (S/C) dans la charge de 2.

**Tableau 1.**

| Espèces | Fractions molaires |
|---|---|
| CO₂ | 0,012 |
| CH₄ | 0,920 |
| C₂H₆ | 0,043 |
| C₃+ | 0,011 |
| N₂ | 0,014 |

Le réacteur-échangeur est alimenté par cette charge après addition de 0,18 t/h d'H₂ issu de la production, c'est-à-dire la purge du PSA (4300), désulfuration et mélange avec 63,7 t/h de vapeur d'eau. Le gaz de synthèse résultant (120) est, après une étape de WGS (3001), refroidi (134) à 40 °C pour abattre 19,7 t/h de condensat avant la purification par PSA (4300). Il résulte de la purification par PSA un flux de 9,2 t/h d'H₂ (200), 0,18 t/h d'H₂ (210) à destination de la charge, et une purge de l'ordre de 64,6 t/h à destination (220) de la chambre de combustion principale (3100).

La chambre de combustion principale (3100) est alimentée en gaz de purge recomprimé (221), en air comprimé (330) à raison de 342 t/h, et en combustible d'appoint (101) ayant la même composition que le gaz de charge à raison de 0,48 t/h.

La combustion produit 407 t/h de fumées chaudes pressurisées (400).

La chambre de combustion secondaire (3200) est alimentée en fumées refroidies (410), en air (320) avec 3,9 t/h et en combustible d'appoint (102) à raison de 0,39 t/h.

Il en résulte un flux (420) de 412 t/h de fumées réchauffées.

52,7 t/h (620) et 58,3 t/h (610) de vapeur d'eau sont produites par un échange de chaleur avec respectivement le gaz de synthèse (120) et les fumées réchauffées (421).

Sur un total de 111 t/h de vapeur d'eau produites, 63,7 t/h sont à destination (650) du procédé, et 43,7 t/h sont à destination d'une turbine (6000) pour l'entraînement du compresseur d'air (5200).

Dans cette configuration il n'est pas utile de recycler la chaleur des fumées en réchauffant l'air de combustion.

### Exemple 2 :

Dans cet exemple on considère une unité de reformage à la vapeur intégrant le réacteur HyGenSys selon la configuration présentée en figure 1.

On reprend la même capacité et la même composition de la charge que dans l'exemple 1. La production est de 100 000 Nm3/h d'hydrogène à 99,8 %mol.

La charge considérée est un gaz naturel contenant 150 ppm d'espèces soufrées et dont la composition en fractions molaires est donnée dans le tableau 1. La charge (100) alimente le procédé à raison de 22,8 t/h, On opère à un ratio molaire vapeur sur carbone (S/C) de 4.

Le réacteur-échangeur (3000) est alimenté par cette charge après addition de 0,15 t/h d'H₂ issu de la production, gaz de purge du PSA (4300), désulfuration et mélange avec 100 t/h de vapeur.

Le gaz de synthèse est, après l'étape de WGS (3001), refroidi (134) à 40 °C pour abattre 55,4 t/h de condensat avant la purification par PSA (4300).

Il résulte de la purification un flux de 9,2 t/h d'H₂ (200), 0,15 t/h d'H₂ (210) à destination de la charge, et une purge de l'ordre de 58,4 t/h à destination (220) de la chambre de combustion principale (3100).

La chambre de combustion principale (3100) est alimentée en gaz de purge recomprimé (221), en air comprimé (330) à raison de 320 t/h, et en combustible d'appoint (101) ayant la même composition que le gaz de charge à raison de 5,1 t/h.

La combustion dans la chambre principale (3100) produit 383 t/h de fumées chaudes pressurisées (400).

La chambre de combustion secondaire (3200) est alimentée en fumées refroidies (410), en air (320) avec 26,8 t/h, et en combustible d'appoint (102) à raison de 2,6 t/h. Il en résulte un flux (420) de 412 t/h de fumées réchauffées.

63,6 t/h (620) et 83,1 t/h (610) de vapeur d'eau sont produites par un échange de chaleur avec respectivement le gaz de synthèse (120) et les fumées réchauffées (421).

Sur un total de 147 t/h de vapeur d'eau produites, 100 t/h sont à destination (650) du procédé, et 46,7 t/h sont à destination d'une turbine (6000) pour l'entraînement du compresseur d'air (5200).

Dans cette configuration on recycle la chaleur des fumées en réchauffant l'air de combustion avec un flux de chaleur de l'ordre de 10 MW, soit une économie de l'ordre de 0,8 t/h de gaz d'appoint.

## Revendications

1. Procédé de vaporeformage de gaz naturel utilisant un réacteur échangeur de vaporeformage (3000), un réacteur de conversion du CO en CO2 (3001), dit réacteur de WGS, et une unité de purification de l'hydrogène par PSA (4300), en vue de produire un gaz de synthèse progressivement enrichi en hydrogène dans les unités de WGS (3001) et de purification (4300), dans lequel les calories nécessaires à la réaction de vaporeformage sont apportées par des fumées de combustion générées dans une première chambre de combustion (3100) sous pression complétée par une seconde chambre de combustion (3200) articulée en série ou en parallèle par rapport à la première chambre de combustion, de façon à produire un flux de vapeur d'eau dans un échangeur (1007) avec lesdites fumées issues des première et seconde chambres de combustion, permettant de couvrir à la fois les besoins en vapeur d'eau de la réaction de vaporeformage et ceux de la turbine à vapeur (6000) permettant l'alimentation du compresseur d'air (5200), et ladite vapeur d'eau générée par le procédé permettant d'atteindre des rapports molaires S/C au niveau du réacteur échangeur de vaporeformage (3000) compris entre 1,5 et 5, et préférentiellement compris entre 2 et 4.

2. Procédé de vaporeformage de gaz naturel selon la revendication 1, dans lequel les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars, lesdites fumées étant introduites dans le réacteur échangeur de vaporeformage (3000) à une température comprise entre 950 et 1300°C, lesdites fumées cèdent leur calories au fluide de procédé dans le réacteur échangeur de vaporéformage et quittent le réacteur échangeur (3000) à une température comprise entre 450°C et 750°C, puis sont réchauffées dans une seconde chambre de combustion (3200) utilisant un combustible d'appoint de manière à relever leur niveau de température à une valeur comprise entre 450°C et 1250°C, niveau de température qui permet la génération de vapeur d'eau dans un échangeur (1007) avec lesdites fumées réchauffées, de manière à couvrir à la fois les besoins en vapeur de la réaction de vaporeformage et ceux de la turbine à vapeur (6000) permettant l'alimentation du compresseur d'air (5200).

3. Procédé de vaporeformage de gaz naturel en vue de produire un gaz de synthèse selon la revendication 1, dans lequel les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars, lesdites fumées étant introduites dans le réacteur échangeur de vaporeformage (3000) à une température comprise entre 950°C et 1300°C, lesdites fumées cèdent leur calories au fluide de procédé dans le réacteur échangeur de vaporéformage et quittent le réacteur échangeur (3000) à une température comprise entre 450°C et 750°C, puis rejoignent les fumées (440) issues d'une seconde chambre de combustion (3200) de manière à produire un flux de fumées mélangées (441) dont la température est comprise entre 450°C et 1250°C,
niveau de température qui permet la génération de vapeur d'eau dans un échangeur (1009) avec lesdites fumées réchauffées, de manière à couvrir à la fois les besoins en vapeur de la réaction de vaporeformage et ceux de la turbine à vapeur (6000) permettant l'alimentation du compresseur (5200).

4. Procédé de vaporeformage de gaz naturel en vue de produire un gaz de synthèse selon la revendication 1, dans lequel les calories nécessaires à la réaction de vaporeformage sont apportées par des fumées de combustion générées dans une première chambre de combustion (3100) travaillant à une pression comprise entre 1,5 et 4 bars, et préférentiellement comprise entre 2 et 3 bars, lesdites fumées étant introduites dans le réacteur échangeur de vaporeformage (3000) à une température comprise entre 950°C et 1300°C, lesdites fumées cèdent leur calories au fluide de procédé dans le réacteur échangeur de vaporéformage et quittent le réacteur échangeur (3000) à une température comprise entre 450°C et 750°C, formant un premier flux de fumées (410),
- ledit premier flux de fumées (410) issu du réacteur échangeur (3000) est introduit dans l'échangeur (1007), de façon à surchauffer le flux de vapeur entrant (630) de manière à produire un flux de vapeur surchauffé (631) et un flux de fumées refroidies (415) qui est amené dans la zone d'échange (1009) pour préchauffer l'air de combustion (301), d'où résulte un flux d'air comprimé réchauffé (310) et un flux de fumées refroidies (416), lesdites fumées refroidies (416) étant à une pression comprise entre 1 et 2 bar et à une température comprise entre 130 et 300 °C,
- le second flux de fumées (450) issu de la seconde chambre de combustion (3200) fonctionnant en parallèle de la première chambre de combustion (3100), est à une température comprise entre 900°C et 1500°C, préférentiellement entre 950 et 1300 °C, et à une pression comprise entre 1,5 et 4 bar, le dit second flux de fumées (450) est amené dans l'échange de chaleur (1008) au contact d'un flux d'eau de chaudière (730) pour en vaporiser une fraction (731), il en résulte un flux de vapeur partiellement vaporisé (731) et des fumées partiellement refroidie (451), ledit flux de fumées refroidies (451) étant introduit dans l'échangeur (1010) pour produire un flux d'eau de chaudière réchauffée (511), le flux de fumées refroidies (452) étant à une pression comprise entre 1 et 2 bar et à une température comprise entre 130 et 300 °C.

5. Procédé de vaporeformage de gaz naturel selon la revendications 1, dans lequel le combustible utilisé dans la première chambre de combustion (3100) est majoritairement constitué par le gaz de purge de l'unité de purification par PSA du gaz de synthèse issu du réacteur échangeur de vaporeformage.

6. Procédé de vaporeformage de gaz naturel selon la revendication 1, dans lequel un combustible d'appoint est utilisé dans la première chambre de combustion (3100), ce combustible étant un gaz combustible léger disponible sur le site.

7. Procédé de vaporeformage de gaz naturel selon la revendications 1, dans lequel les combustibles d'appoint utilisés dans la première et la seconde chambre de combustion sont identiques.
